# EUROPÄISCHE PATENTANMELDUNG

(11) **EP 1 985 898 A1**
(43) Veröffentlichungstag der Anmeldung: **29.10.2008**
(21) Anmeldenummer: 07020453.2
(22) Anmeldetag: 18.10.2007
(51) Int. Cl.: F16J 15/08, F02F 11/00

(54) **Metallische Flachdichtung**

(30) Priorität: 24.04.2007 EP 07008321
(71) Anmelder: REINZ-Dichtungs-GmbH, 89233 Neu-Ulm (DE)
(72) Erfinder: Waldvogel, Johann, 86381 Krumbach (DE); Egloff, Georg, 89264 Weißenhorn (DE); Unseld, Günther, 89189 Neenstetten (DE); Höhe, Kurt, 89129 Langenau (DE)
(74) Vertreter: Tomerius, Isabel

(57) **Zusammenfassung**

Die Erfindung betrifft eine metallische Flachdichtung mit zwei oder mehr metallischen Dichtungslagen (2,3,3',3") von denen eine verkürzte Dichtungslage (2) gegenüber der wenigstens einen anderen Dichtungslage (3,3',3") eine geringere Flächenausdehnung aufweist. Wenigstens eine durch die Dichtungslagen (2,3,3',3") hindurchgehende Durchgangsöffnung (4) wird von einer in eine der ausgedehnteren Dichtungslagen (3) eingeformten, in sich geschlossenen Sicke (5) umgeben, wobei die verkürzte Dichtungslage (2) einen die Sicke (5) nicht umfassenden Außenrandbereich (6) der ausgedehnteren Dichtungslage (3) freilässt. In einer der Dichtungslagen (2,3,3',3") ist in einem Bereich der Dichtung, in dem die verkürzte Dichtungslage (2) vorhanden ist, oder unmittelbar seitlich an diesen Bereich angrenzend benachbart zur Position der Sicke (5) wenigstens eine Strukturierung vorhanden, die über mindestens eine Oberfläche der Dichtungslage (2,3,3',3") vorsteht und die aus einer Vielzahl in die Dichtungslage (2,3,3',3") eingeformter, einander abwechselnder Erhebungen (31) und Vertiefungen (32) besteht, wobei die Strukturierung (7) zumindest abschnittsweise in Umfangsrichtung um die Durchgangsöffnung (4) vorhanden ist.

## Beschreibung

Die Erfindung betrifft eine metallische Flachdichtung mit wenigstens zwei Dichtungslagen, durch welche wenigstens eine Durchgangsöffnung hindurchgeht. Von den Dichtungslagen ist eine gegenüber den anderen verkürzt und weist eine geringere Flächenausdehnung auf. In eine ausgedehntere Dichtungslage ist eine Sicke eingeformt, welche die Durchgangsöffnung in sich geschlossen umgibt. Die verkürzte Dichtungslage ist in einem sich radial außerhalb an die Sicke anschließenden Außenrandbereich der ausgedehnteren Dichtungslage nicht vorhanden. Derartige metallische Flachdichtungen werden beispielsweise als Dichtung im Bereich von Verbrennungsmotoren und deren Abgasstrang, insbesondere als Abgaskrümmerdichtungen oder als Zylinderkopfdichtungen eingesetzt.

Um zu erreichen, dass die Sicke die Durchgangsöffnung zuverlässig abdichtet, ist es im Allgemeinen erforderlich, dass die Sicke gleichmäßig und mit ausreichend hoher Pressung belastet wird. Dies gilt insbesondere für die Abdichtung von Brennraumöffnungen in Zylinderkopfdichtungen und hier insbesondere für Zylinderkopfdichtungen, die in Motoren mit Open-Deck-Konstruktionen eingesetzt werden. Zur Erhöhung der Pressung im Bereich der Sicke sind Zylinderkopfdichtungen vorgeschlagen worden, in denen um die Brennraumöffnung herum eine brillenartig geformte zusätzliche Lage vorhanden ist. Diese zusätzliche Lage wird im Englischen als "shim" bezeichnet. Bei einem solchen Shim handelt es sich um eine gegenüber den restlichen Dichtungslagen verkürzte Lage, die oft nur wenig über den Bereich der von den Brennraumöffnungen aus gesehen äußeren Sickenfüße reicht und ggf. an den Wassermantel heranreicht. Meist ist sie eine plane Lage, die ausschließlich der Erhöhung der Materialstärke im Bereich der Brennraum-Sicken dient. Der Zweck des Shims ist also eine Materialverdickung im Aufstandsbereich der Sicken, die dazu führt, dass die Sicken im Krafthauptschluss liegen und die Pressung im Bereich der Sicken erhöht wird. Beispiele von Zylinderkopfdichtungen mit Shim sind beispielsweise in der EP 1065417 A2 beschrieben.

In letzter Zeit werden immer häufiger Motoren eingesetzt, in denen - um Gewicht einzusparen - der Motorblock aus leichten Metallen oder Metalllegierungen wie Aluminium oder Aluminium/Magnesium bestehen. Zudem wird der Motorblock skelettartig auf die tragenden Teile reduziert, während die Öffnungen - zum Beispiel die Kühlwasseröffnungen in Open-Deck-Motoren - sehr groß sind. Diese Bauweise führt zu einer erhöhten Temperaturbelastung und verringerten Steifigkeit der Motorblockoberseite und erfordert Zylinderkopfdichtungen, die auch bei relativ geringer Schraubenkraft den Spalt zwischen Motorblock und Zylinderkopf zuverlässig abdichten. Kritisch bei herkömmlichen Zylinderkopfdichtungen mit Shim ist dabei insbesondere, dass bei lokalen Schwächen im Motorblock und ungenügender Bauteilsteifigkeit eine Nachbesserung hinsichtlich der Dichtspaltbewegungen und der Pressungsverteilung praktisch nicht mehr möglich ist. Bei zu hoch eingestellter Pressung besteht die Gefahr, dass die Sicken zu stark verpresst werden, bei der hohen Temperaturbelastung und übermäßigen Verpressung ihre Elastizität verlieren und nicht mehr ausreichend abdichten.

Es bestand daher ein Bedarf an einer metallischen Flachdichtung, insbesondere einer Zylinderkopfdichtung, der eingangs beschriebenen Art, die auch unter den ungünstigen Bedingungen einer hohen Temperaturbelastung und geringer Steifigkeit einer abzudichtenden Gegenfläche zu einer zuverlässigen Abdichtung führt. Aufgabe der Erfindung ist es entsprechend, eine derartige metallische Flachdichtung anzugeben.

Die Lösung dieser Aufgabe gelingt mit der metallischen Flachdichtung gemäß Anspruch 1. Bevorzugte Weiterbildungen der Flachdichtung sind in den Unteransprüchen beschrieben.

Die erfindungsgemäße metallische Flachdichtung weist wenigstens zwei metallische Dichtungslagen auf. Eine der Dichtungslagen ist eine verkürzte Dichtungslage, die eine gegenüber der wenigstens einen anderen Dichtungslage geringere Flächenausdehnung aufweist. Durch die Dichtungslagen geht wenigstens eine Durchgangsöffnung hindurch, die von einer in eine der ausgedehnteren Dichtungslagen eingeformten, in sich geschlossenen Sicke umgeben wird. In einem diese Sicke nicht umfassenden Außenrandbereich der ausgedehnteren Dichtungslage ist die verkürzte Dichtungslage nicht vorhanden. In eine der Dichtungslagen ist in einem Bereich der Dichtung, in dem die verkürzte Dichtungslage vorhanden ist, oder unmittelbar seitlich an diesen Bereich angrenzend benachbart zur Position der Sicke und in Richtung auf diese vorstehend wenigstens eine Strukturierung in die Dichtungslage eingeformt. Diese besteht aus einer Vielzahl einander abwechselnder Erhebungen und Vertiefungen. Dabei ist die Strukturierung nur abschnittsweise in Umfangsrichtung um die Durchgangsöffnung vorhanden. Im Bereich der Strukturierung ist die Gesamthöhe der Lage einschließlich der durch die Strukturierung eingebrachten Höhe größer als die Gesamthöhe der Lagen im benachbarten Bereich, in dem die verkürzte Dichtungslage vorhanden ist. Die verkürzte Lage kann dabei in den strukturierten Bereich hineinragen, muss dies aber nicht.

Durch die Strukturierung der Dichtungslage wird lokal in einem Abschnitt um die Durchgangsöffnung herum ein Bereich geschaffen, in dem die Materialstärke größer ist, als sie ohne die Strukturierung wäre. Dieser Bereich wird zweckmäßig so angeordnet, dass er sich dort befindet, wo sich in der abzudichtenden Gegenfläche (also beispielsweise der Motorblock- oder Zylinderkopfoberfläche) ein Ort verringerter Bauteilsteifigkeit befindet. Die Materialverdickung durch die Strukturierung sorgt dafür, dass in diesem kritischen Bereich eine ausreichende Pressung erzielt werden kann.

Kritische Bereiche verringerter Bauteilsteifigkeit liegen bei Motoren beispielsweise im Bereich zwischen benachbarten Zylinderbohrungen oder auch im Bereich von Hinterschnitten im Zylinderkopf. Entsprechend wird die Strukturierung erfindungsgemäß bevorzugt in diesen Bereichen angeordnet. Die kritischen Bereiche können aber auch alle sonstigen Bereiche um eine Durchgangsöffnung einer Dichtung sein, in denen (beispielsweise aufgrund geringer Materialstärke, Fehlern bei der Herstellung (z.B. Oberflächenunregelmäßigkeiten) oder aus sonstigen Gründen) in der benachbarten abzudichtenden Gegenfläche verringerte Bauteilsteifigkeiten oder örtliche Strukturschwächen des Bauteils zu erwarten sind.

Die Strukturierung kann entweder zwischen Sicke und Durchgangsöffnung oder auf der von der Durchgangsöffnung abgewandten Seite der Sicke oder auch auf beiden Seiten der Sicke vorhanden sein. In einer bevorzugten Ausführungsform reicht die Strukturierung in ihrer Längsausdehnung nur abschnittsweise um die Durchgangsöffnung herum, umgibt diese aber nicht vollständig, sondern ist auf die besonders kritischen Bereiche wie beispielsweise einen Stegbereich zwischen benachbarten Durchgangsöffnungen beschränkt. In ihrer Breitenausdehnung ist die Strukturierung - im Allgemeinen bereits aus Platzgründen - in der Regel kleiner als in ihrer Längserstreckungsrichtung. Bevorzugt ist sie streifenförmig und insbesondere ringsegmentförmig ausgebildet. In letzterem Fall folgt die Strukturierung zweckmäßig dem Verlauf der Durchgangsöffnung bzw. der sie umgebenden Sicke.

In einer bevorzugten Variante der Erfindung ist die Strukturierung so ausgebildet, dass sich ihre sich abwechselnden Erhebungen und Vertiefungen linienförmig ausdehnen. Auf diese Weise wird eine wellenartige Strukturierung des entsprechenden Bereichs der Dichtungslage gebildet. Besonders bevorzugt sind die Erhebungen und Vertiefungen dabei in Form konzentrischer Ringsegmente ausgebildet. Der Querschnitt der Wellenberge und Wellentäler der wellenförmigen Strukturierung in einem Schnitt in Radialrichtung kann grundsätzlich beliebig gestaltet werden. Bevorzugte Formen weisen ein sinus-, trapez- oder zickzackförmiges Querschnittsprofil auf. Es sind jedoch auch Abwandlungen dieser Formen, beispielsweise mit unterschiedlich steil ansteigenden Flanken, abgeplatteten Scheiteln usw. denkbar. Die Querschnittsform kann für alle Wellenberge und Wellentäler gleich sein oder sich für einzelne Wellenberge und/der Wellentäler unterscheiden. Außerdem ist es möglich, die Querschnittsform im Verlauf eines einzelnen Wellenberges oder Wellentales zu verändern. Derartige Strukturierungen mit ringförmig geschlossenen Erhebungen und Vertiefungen sind bereits als Stopper für Sicken bekannt, die eine Öffnung in einer Zylinderkopfdichtungen abdichten, und werden üblicherweise als Wellen-Stopper bezeichnet. Solche Wellen-Stopper sind bereits in der WO 01/96768 A1 und der DE 102004011721 A1 der Anmelderin beschrieben. Diese Art der Strukturierung sowie die Art der Herstellung können für die Strukturierung der vorliegenden Erfindung in der beschriebenen Weise eingesetzt werden. Es kann insofern auf den Inhalt der genannten Druckschriften verwiesen werden.

In einer alternativen Ausführungsform sind die Erhebungen und Vertiefungen der Strukturierung auf wenigstens einer Schar im Wesentlichen parallel über die Gesamtausdehnung der Strukturierung verlaufender virtueller gerader Linien angeordnet. Bevorzugt wechseln sich dabei die Erhebungen und Vertiefungen quer zur Erstreckungsrichtung der Linien ab. Eine derartige Strukturierung ist ebenfalls grundsätzlich für metallische Flachdichtungen bereits bekannt und ebenfalls von der Anmelderin der vorliegenden Erfindung beschrieben, nämlich in der europäischen Patentanmeldung 07008321.7. Die Erhebungen und Vertiefungen sind im Querschnitt bevorzugt trapezförmig, dreieckig, gerundet oder rechteckig.

Bei der Schar im Wesentlich parallel verlaufender gerader Linien handelt es sich um virtuelle Linien. Diese Linien setzen sich zwar über die gesamte Fläche der Strukturierung fort, jedoch müssen nicht zwangsläufig an jeder Stelle dieser Linien auch Erhebungen oder Vertiefungen vorhanden sein. Beispielsweise kann sich eine virtuelle Linie bei einem stark gekrümmten strukturierten Bereich von einem zum anderen Ende der Krümmung über den von der Krümmung umgebenen Bereich, in dem keine Erhebungen und Vertiefungen vorhanden sind, erstrecken. In einem solchen Fall verlaufen Erhebung(en) und/oder Vertiefung(en) auf der virtuellen geraden Linie bis an den unstrukturierten Bereich heran, werden dort unterbrochen und setzen sich dann auf der gegenüberliegenden Seite auf derselben geraden Linie weiter fort. Bei der Schar im Wesentlichen parallel verlaufender gerader Linien soll unter einem im Wesentlichen parallelen Verlauf der Linien eine Abweichung von der Parallelität von maximal 5 ° und insbesondere maximal 2 ° verstanden werden.

Die Erhebungen und Vertiefungen im Ausgleichsbereich der erfindungsgemäßen Flachdichtung werden bevorzugt durch Prägen hergestellt. Werden dabei zwei komplementäre Prägeformen verwendet, deren Erhebungen jeweils gegenüber den Erhebungen der anderen Prägeform seitlich versetzt sind und in die Vertiefungen der Gegenform eingreifen, ergibt sich ein Ausgleichsbereich, dessen Erhebungen über beide Oberflächen der zweiten Dichtungslage vorstehen. Die Materialaufdickung durch die Strukturierung im Ausgleichsbereich wird also zu beiden Oberflächen der zweiten Dichtungslage wirksam. Um die Materialverdickung im Ausgleichsbereich vollständig für die erste Dichtungslage wirksam zu machen, kann der Ausgleichsbereich der zweiten Dichtungslage beispielsweise in Richtung auf die erste Dichtungslage hin gekröpft werden. Ebenfalls lässt sich durch asymmetrische Werkzeug-Gestaltung erreichen, dass die Erhebungen des Ausgleichsbereichs nur über eine Oberfläche der zweiten Dichtungslage vorstehen.

Insgesamt weist der geprägte Bereich in seinem Querschnitt Erhebungen, Vertiefungen und jeweils einen Übergangsbereich, auch als Flanke bezeichnet, zwischen benachbarten Erhebungen und Vertiefungen auf. Die Strukturen werden bevorzugt mittels Verpressens erzeugt. Dabei wird das Material im Bereich der Flanke gegenüber der Materialstärke im Bereich der Erhebungen und Vertiefungen verringert, wodurch der Ausgleichsbereich versteift wird. Die Materialverjüngung im Flankenbereich beträgt dabei mindestens 8%, bevorzugt mindestens 10%, besonders bevorzugt mindestens 13% und insbesondere mindestens 15% relativ zur Materialstärke im Bereich der benachbarten Erhebung bzw. Vertiefung.

Der strukturierte Bereich kann neben den oben genannten quer zur Erstreckungsrichtung der virtuellen geraden Linien sich abwechselnden Erhebungen und Vertiefungen auch so ausgestaltet sein, dass Erhebungen und Vertiefungen auf zu einander benachbarten Linien jeweils versetzt zueinander angeordnet sind. In diesen Fall ergibt sich eine schachbrettähnliche Struktur von Erhebungen und Vertiefungen. Bevorzugt verlaufen die Vertiefungen entlang mindestens zweier sich schneidender Scharen virtueller gerader Linien. Besonders bevorzugt ist eine Anordnung auf sich rechtwinklig schneidenden virtuellen geraden Linien. In der sich dabei ergebenden Gesamtstruktur weisen die Erhebungen die Form eines Polyederstumpfes auf.

Insgesamt ist festzuhalten, dass der Bereich der Strukturierung ein Bereich erhöhter plastischer Verformung der Dichtungslage ist, der keine oder eine nur sehr geringe Elastizität aufweist. Entsprechend ist die Größe der Strukturen der Strukturierung (zum Beispiel verglichen mit herkömmlichen elastisch verformbaren Sicken) deutlich geringer. Bevorzugt wird die Höhe der Strukturierung so eingestellt, dass die Erhebungen um 0,01 bis 0,4 mm über die Dichtungslage vorstehen, in die sie eingeformt sind. Die Höhe hängt dabei hauptsächlich davon ab, ob die Strukturierung mit der verkürzten Lage teilweise überlappt oder nicht. Im erstgenannten Fall (Überlappung) beträgt die Höhe bevorzugt zwischen 0,01 und 0,05 mm, im zweitgenannten Fall zwischen 0,09 und 0,40 mm. Die Höhe kann schon bei Herausarbeiten der Erhebungen aus der Dichtungslage eingestellt werden oder dadurch, dass die erzeugten Erhebungen nach ihrer Herstellung abschnittsweise oder über den gesamten strukturierten Bereich planiert werden. Der Abstand der Scheitelpunkte benachbarter paralleler Erhebungen liegt zweckmäßig in einem Bereich bis zu 2,0 mm, bevorzugt bis zu 1,6 und besonders bevorzugt bis zu 1,3 mm, insbesondere bis zu 0,7 mm. Weisen die Erhebungen keinen Scheitelpunkt, sondern einen abgeplatteten Scheitelbereich auf, wird der Abstand zwischen den Mittelpunkten dieser Scheitelbereiche gemessen und zwar immer in einer zur Ebene der Dichtungslage parallelen Ebene.

Durch die Strukturierung im strukturierten Bereich besitzt die strukturierte Dichtungslage dort eine größere Dicke als die Dicke der originären Dichtungslage, d.h., der planen Dichtungslage vor Einbringen der Strukturierung. Die Höhe der Strukturierung wird dabei als Abstand zwischen zwei Tangentialebenen gemessen, die jeweils parallel zur Ebene der nicht verformten. Dichtungslage verlaufen. Der Abstand wird also zwischen der Ebene der unbehandelten Dichtungslage und einer Ebene gemessen, die an den über diese Oberfläche der Dichtungslage vorstehenden Erhebungen anliegt. Dabei muss die Höhe der Erhebungen nicht über den gesamten strukturierten Bereich gleich hoch sein. Vertiefungen sind gegenüber den Erhebungen niedrigere Bereiche, also nicht unbedingt Bereiche, die in die Ebene der unverformten Dichtungslage eingetieft sind.

Durch das Prägen des strukturierten Bereiches kann die Strukturierung in einem sehr breiten Bereich variabel eingestellt werden, ohne dass zusätzliches Material benötigt wird. Die Strukturierung muss - wie ausgeführt - nicht über den gesamten strukturierten Bereich einheitlich ausgebildet sein, sondern kann vielmehr über die Fläche des strukturierten Bereiches variieren. Es kann also im strukturierten Bereich eine Topographie erzeugt werden, die eine gezielte Beeinflussung der Pressung der Sicke und eine Anpassung an die abzudichtenden Gegenflächen und deren Bauteilsteifigkeiten ermöglicht. Zweckmäßig wird die Topographie im strukturierten Bereich dabei so gewählt, dass die Dichtspaltbewegung möglichst gleichmäßig wird.

Die Strukturierung kann grundsätzlich in einer beliebigen der Dichtungslagen ausgebildet werden. Eine Möglichkeit besteht darin, die Strukturierung in der verkürzten Dichtungslage auszubilden. Da die verkürzte Dichtungslage nur eine vergleichsweise geringe räumliche Ausdehnung besitzt, wird sich die Strukturierung im Allgemeinen entlang eines oder beider ihrer Außenränder erstrecken, während das Innere plan ausgebildet ist und als Aufstandsbereich für die Sicke dient. In einer anderen Möglichkeit ist die Strukturierung in wenigstens einer der ausgedehnteren Dichtungslagen ausgebildet. Sie liegt dann entweder in einem Bereich, in dem die verkürzte Dichtungslage vorhanden ist oder unmittelbar seitlich an einen Außenrand der verkürzten Dichtungslage angrenzend. "Unmittelbar angrenzend" bedeutet dabei, dass der Abstand zwischen dem Rand der Strukturierung und dem Außenrand der verkürzten Dichtungslage nicht mehr als 3 mm, bevorzugt nicht mehr als 2 mm beträgt. Wie bereits erwähnt, kann die Strukturierung auch beidseitig der Sicke vorhanden sein.

Wenn die in einer ausgedehnteren Dichtungslage ausgebildete Strukturierung mit der verkürzten. Dichtungslage überlappt, entsteht im Bereich der Strukturierung eine lokale Materialverdickung, in deren Bereich die Summen der Dicken aller dort vorhandener Dichtungslagen größer ist als die Summe der Dicken aller Dichtungslagen in einem an die Strukturierung angrenzenden Bereich. Auf diese Weise wird seitlich benachbart zur Sicke ein verdickter Bereich gebildet, der eine erhöhte Pressung aufnehmen und die Pressung auf die Sicke reduzieren kann. Durch gezielte Wahl der Höhe der Strukturierung kann hierbei die Dichtspaltbewegung begrenzt werden. Es ist außerdem möglich, sowohl in der verkürzten als auch einer ausgedehnteren Dichtungslage Strukturierungen auszubilden. Diese sind dann bevorzugt in seitlich gegeneinander versetzten Bereichen angeordnet.

Überlappt die Strukturierung dagegen nicht mit der verkürzten Dichtungslage, muss die Strukturierung so ausgestaltet sein, dass die Gesamtdicke im Bereich der Strukturierung größer ist als im benachbarten Bereich mit der verkürzten Lage.

In der einfachsten Ausführungsform weist die erfindungsgemäße metallische Flachdichtung in der verkürzten Dichtungslage lediglich eine einzige Durchgangsöffnung auf, die von einer Sicke umschlossen wird. Die verkürzte Dichtungslage ist dann überwiegend ring- und insbesondere kreisringförmig. In den meisten Fällen wird die metallische Flachdichtung jedoch mehrere Durchgangsöffnungen haben, die jeweils von einer in die ausgedehntere Dichtungslage eingeformten Sicke umgeben werden. Im Falle mehrerer Durchgangsöffnungen ist die verkürzte Dichtungslage bevorzugt brillenartig ausgebildet, wie dies grundsätzlich bereits aus dem Stand der Technik für Shims bekannt ist (vergleiche EP 1065417 A2).

Weist die erfindungsgemäße metallische Flachdichtung mehrere, jeweils von einer Sicke umgebene Durchgangsöffnungen auf und befindet sich gleichzeitig im Bereich zwischen den Durchgangsöffnungen der Bereich geringster Krafteinleitung, wird die Strukturierung bevorzugt in diesem Bereich verringerter Krafteinleitung, also zwischen benachbarten Durchgangsöffnungen und insbesondere nur dort vorhanden sein. Bei einer derartigen Anordnung kann der verringerten Bauteilsteifigkeit im schmalen Stegbereich zwischen benachbarten Durchgangsöffnungen (beispielsweise den Zylinderbohrungen eines Motorblocks) Rechnung getragen und hier für eine geeignete Einstellung der auf die Sicke wirkenden Pressung gesorgt werden. Bei einem nur sehr geringen Abstand zwischen benachbarten Durchgangsöffnungen ist es auch möglich, dass die Sicken im Stegbereich zwischen den Durchgangsöffnungen zu einem einzigen Sickenabschnitt zusammenlaufen. In solchen Fällen ist für eine zwischen den von den Durchgangsöffnungen abgelegenen Sickenfüßen angeordnete Strukturierung zumindest im Mittelbereich, wo die Breite des Stegs am geringsten ist, kein Platz mehr. Jedoch können in einem oder beiden dem Mittelbereich benachbarten Steg-Randbereichen Strukturierungen angeordnet werden, da hier die Ränder der Durchgangsöffnungen und die Sicken sich wieder voneinander entfernen.

Zusätzlich oder alternativ zur Anordnung der Strukturierung im Stegbereich zwischen benachbarten Durchgangsöffnungen kann diese grundsätzlich in den Bereichen vorhanden, sein, bei denen sich aus dem Zusammenspiel von eingeleiteter Schraubenkraft und lokaler Steifigkeit der abzudichtenden Bauteile eine verringerte effektive Krafteinleitung ergibt. Es kann auch mehr als ein oberflächenstrukturierter Bereich um eine Durchgangsöffnung herum vorhanden sein.

In einer einfachen Ausgestaltung weist die erfindungsgemäße metallische Flachdichtung neben der verkürzten Dichtungslage lediglich eine weitere ausgedehntere Dichtungslage auf, in welche dann die wenigstens eine Sicke eingeformt ist. Die Strukturierung kann sich entweder in der verkürzten und/oder der ausgedehnteren Dichtungslage befinden.

Weist die metallische Flachdichtung neben der verkürzten Dichtungslage mehr als ein ausgedehntere Dichtungslage auf, können letztere gleich oder unterschiedlich ausgebildet sein. Beispielsweise kann in eine die Sicke eingeformt sein, während die andere die Strukturierung aufweist und gegebenenfalls zusätzlich eine Sicke zur Abdichtung der Durchgangsöffnung. Besitzt sie keine Sicke, handelt es sich zum Beispiel um eine abgesehen von der Strukturierung plane Dichtungslage, die üblicherweise als Distanzlage bezeichnet wird und über ihre gesamte Ausdehnung keinerlei Sicken, Falze oder Ähnliches enthält und vorwiegend der Einstellung der Gesamtdicke des Verbunds aus mehreren Dichtungslagen dient. Alternativ befinden sich Strukturierung und Sicke in derselben ausgedehnteren Dichtungslage.

Bevorzugt ist eine Variante der erfindungsgemäßen Flachdichtung mit mindestens drei Dichtungslagen, in denen wenigstens zwei ausgedehntere Dichtungslagen zueinander komplementäre und insbesondere spiegelbildlich zueinander angeordnete Sicken aufweisen. Dabei können die Sicken mit den Sickenscheiteln aufeinander zuweisend oder auch voneinander wegweisend angeordnet werden. Im Fall, dass in mehreren ausgedehnteren Dichtungslagen jeweils Sicken zur Abdichtung der Durchgangsöffnung vorhanden sind, bestehen diese Dichtungslagen bevorzugt aus dem gleichen Material, um eine gleiche Federkonstante für die Sicken in den Dichtungslagen zu erhalten. Die Verwendung gleicher Materialien für die Dichtungslagen erleichtert zudem die Herstellung und senkt die Kosten. Es ist jedoch auch möglich, für die Dichtungslagen unterschiedliche Materialien zu verwenden und - wenn eine gleiche Federkonstante für die die Durchgangsöffnung umgebenden Sicken gewünscht ist - diese Federkonstante durch die Formgebung der Sicken oder in sonstiger an sich bekannter Weise einzustellen.

Unabhängig davon, ist es grundsätzlich möglich, die Form der Sicke zu variieren, um ihre Eigenschaften in Umfangsrichtung zu ändern und an die vorgegebenen Bedingungen optimal anzupassen. In an sich bekannter Weise wird dabei bevorzugt wenigstens eine der folgenden Eigenschaften in Umfangsrichtung geändert: die Querschnittsform der Sicke, ihre Höhe und ihre Breite. Prinzipiell ist es auch möglich, die Sickeneigenschaften durch chemische Behandlung, Laserbestrahlung oder Temperaturbehandlung anzupassen. In Bereichen verringerter Krafteinleitung kann die Steifigkeit der Sicke dabei gezielt erhöht sein.

Weiter ist es möglich, insbesondere wenn die Strukturierung in der verkürzten Lage eingebracht ist und wenn bei einer Dichtung mit mindestens zwei ausgedehnteren Lagen mit Vollsicken deren Sickenscheitel aufeinander zu zeigen, in mindestens einer der gesickten Lagen zwischen der Vollsicke und dem Brennraum eine Kröpfung vorzusehen, deren Höhe deutlich geringer - beispielsweise 1/3 der Höhe - ausfällt als die Höhe der Sicke oder den Abschnitt so aus der Ebene heraus zu neigen, dass er in Richtung der anderen ausgedehnten Lage zeigt. Diese Maßnahmen können eine zusätzliche Vorabdichtung gegenüber Brenngasen bewirken.

Im so genannten Hinterland der erfindungsgemäßen Flachdichtung - also im Außenrandbereich, wo die verkürzte Dichtungslage und die Strukturierung nicht vorhanden sind - kann diese prinzipiell wie aus dem Stand der Technik bekannt ausgebildet sein. Prinzipiell ist die verkürzte Dichtungslage nur so groß wie für die Funktion der Dichtung nötig ausgelegt. Ihre Ausdehnung richtet sich hauptsächlich nach den Abmessungen der Sicken, die im selben Bereich wie die verkürzte Dichtungslage vorhanden sind bzw. nach den Abmessungen des Wassermantels. Im Allgemeinen besitzt die verkürzte Dichtungslage eine Breite, die nicht größer als der siebenfache Abstand zwischen den Sickenfüßen der Sicken in ihrem Bereich ist. Wie bereits erwähnt, können im Hinterland der Dichtung weitere Öffnungen vorhanden sein. Im Falle von Zylinderkopfdichtungen sind dies Öffnungen für Befestigungsmittel, Öl und Kühlflüssigkeit. Diese Öffnungen können jeweils wie im Stand der Technik üblich mit Dichtelementen abgedichtet sein. Hier können grundsätzlich die im Stand der Technik gebräuchlichen Dichtelemente eingesetzt werden, also beispielsweise Dichtelemente aus Elastomer und/oder in die wenigstens eine ausgedehntere Dichtungslage eingeformte Sicken. Das Elastomer kann ein- oder beidseitig auf die Dichtungslage aufgetragen oder an den Öffnungsrand angespritzt sein. Die Dichtelemente des Hinterlandes können auch auf an sich bekannte Weise als separate, in die Dichtungslage eingesetzte Bereiche (so genannte Inserts) ausgebildet sein.

Die erfindungsgemäße metallische Flachdichtung lässt sich aus den bisher für metallische Flachdichtungen üblichen Materialien mit den gängigen Fertigungswerkzeugen herstellen. Als Material derjenigen Dichtungslagen, in welche Sicken als Dichtelemente für Durchgangsöffnungen eingeformt sind, wird zweckmäßig Federstahl verwendet. Für die anderen Dichtungslagen, die keine Sicken aufweisen, kann weicherer Stahl, beispielsweise Baustahl, verwendet werden. Es können dabei Edelstähle oder Kohlenstoffstähle verwendet werden. Zudem können einzelne oder alle der Dichtungslagen der erfindungsgemäßen Flachdichtung ganz oder teilweise, ein- oder beidseitig beschichtet sein. Hier können die an sich bekannten Beschichtungen zur Verbesserung der Mikroabdichtung, der Gleitreibeigenschaften usw. verwendet werden.

Die einzelnen Dichtungslagen der erfindungsgemäßen Flachdichtung können auf im Stand der Technik übliche Weise miteinander verbunden werden, zum Beispiel durch Nieten, Schweißen (Punkt-, Laserschweißen usw.), durch Clinchen, Löten, Kleben, Anclipsen usw.

Die erfindungsgemäße metallische Flachdichtung eignet sich für eine Vielzahl von Anwendungen, beispielsweise als Flanschdichtung, Abgaskrümmerdichtung oder ähnliches. Der Begriff Flachdichtung schließt ausdrücklich auch solche dreidimensional verformten Dichtungen ein, die aus einem zweidimensionalen Körper verformt wurden, so z.B. konische Dichtungen. Besonders geeignet ist die erfindungsgemäße Flachdichtung als Zylinderkopfdichtung, wobei die Durchgangsöffnungen den Brennraumöffnungen entsprechen. Besonders eignet sich eine derartige Zylinderkopfdichtung für Open-Deck-Motoren, in denen die Wasseröffnungen zur Oberseite des Motorblocks hin offen sind. Die verkürzte Dichtungslage übernimmt die Funktion eines herkömmlichen Shims. Im Unterschied zum Stand der Technik passt sich eine erfindungsgemäße Dichtung aufgrund der gezielten Anordnung der Strukturierung in Bereichen, in denen strukturelle Schwächen oder eine verringerte Steifigkeit der abzudichtenden Bauteile vorhanden sind, besser an die abzudichtenden Gegenflächen an und sorgt für eine dauerhaftere Dichtigkeit.

Die Erfindung soll nachfolgend anhand von Zeichnungen näher erläutert werden. Die Figuren dienen ausschließlich der Darstellung bevorzugter Ausführungsbeispiele, ohne dass die Erfindung auf diese beschränkt wäre. In den Figuren bezeichnen gleiche Bezugszeichen gleiche Teile. In den Figuren zeigen schematisch:
- Figur 1: in Teilfiguren a bis f Draufsichten auf Beispiele einer metallischen Flachdichtung jeweils am Beispiel einer Zylinderkopfdichtung;
- Figuren 2 bis 18: verschiedene Ausführungsbeispiele erfindungsgemäßer Zylinderkopfdichtungen im Teil-Querschnitt in einem Bereich um eine Brennraumöffnung der Dichtung gemäß Figur 1 sowie
- Figur 19: einen Teilquerschnitt durch eine mit Erhebungen und Vertiefungen versehene Strukturierung einer erfindungsgemäßen metallischen Flachdichtung.

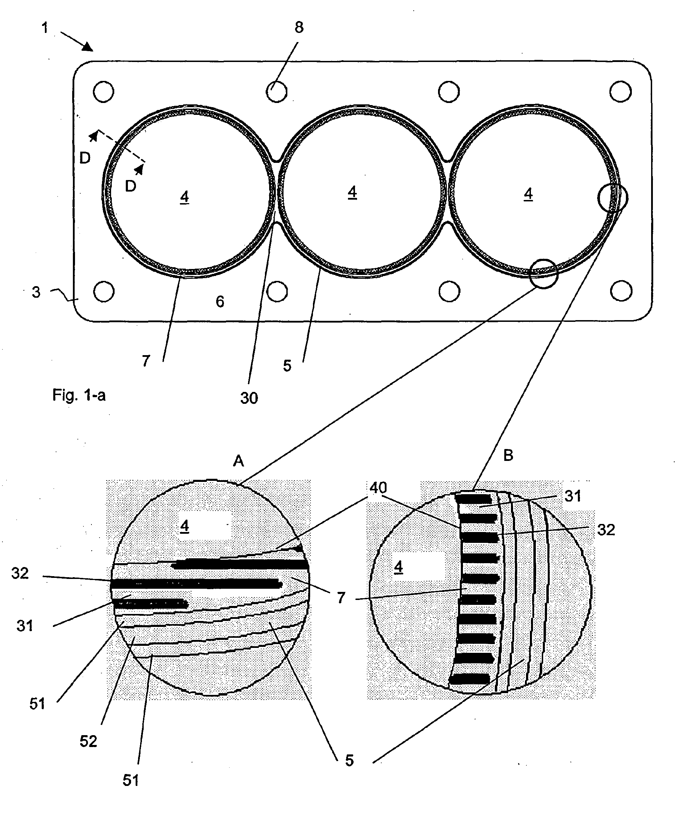

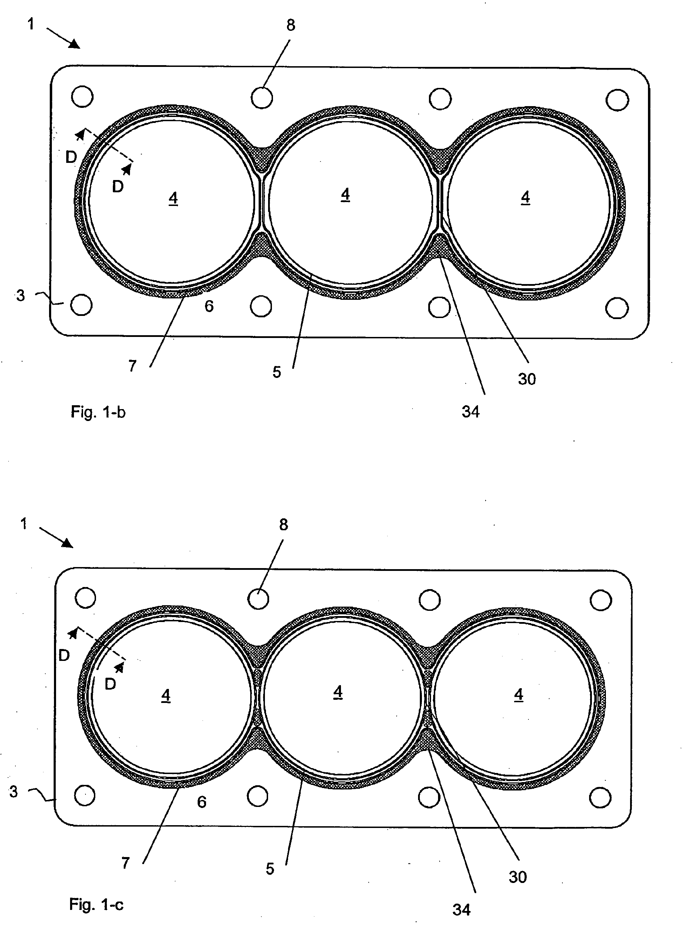

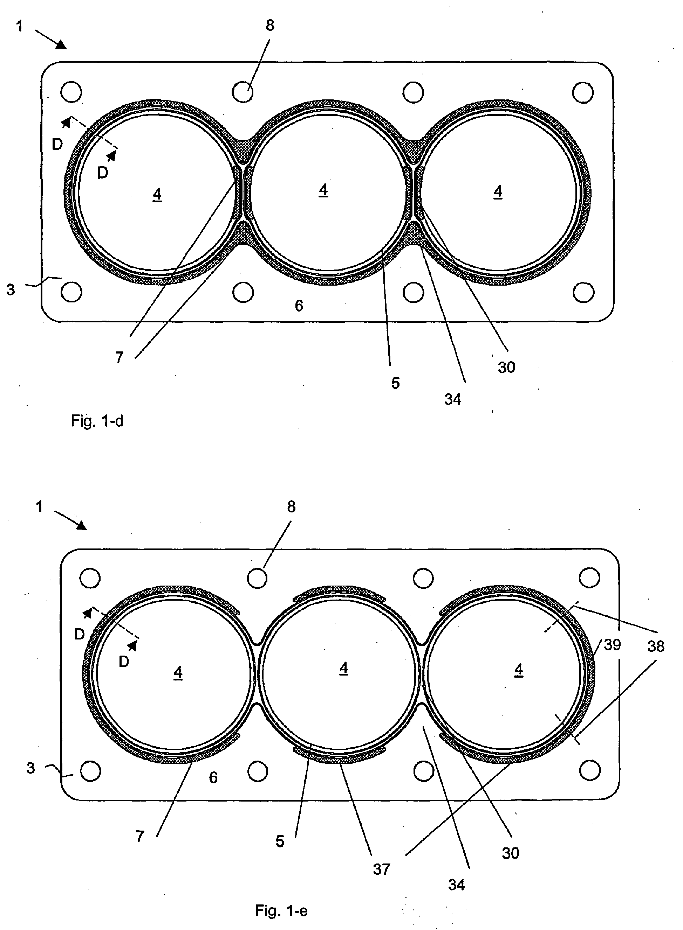

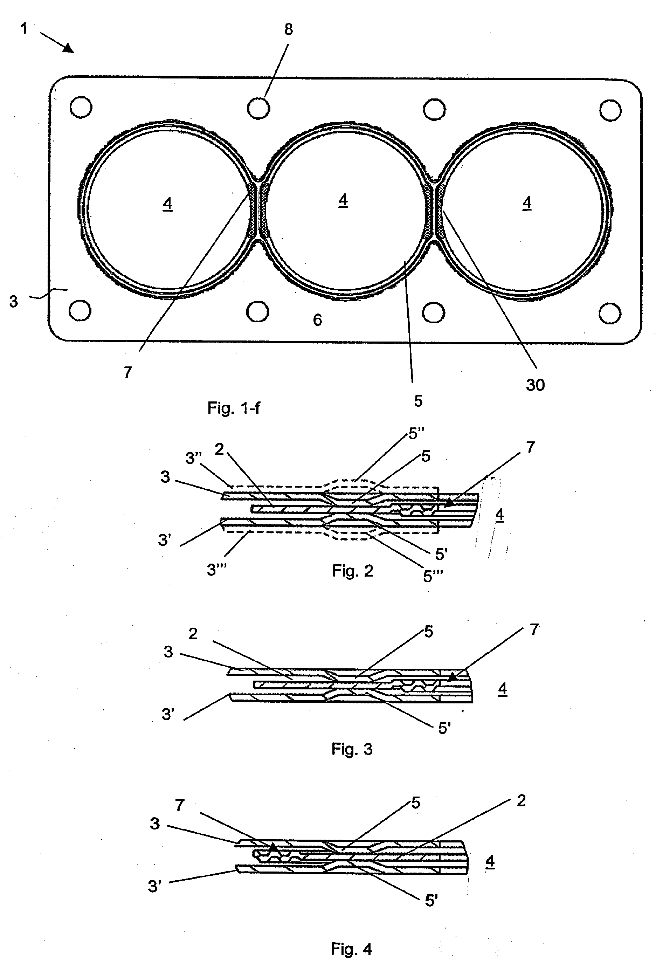

Figur 1-a zeigt eine metallische Zylinderkopfdichtung 1 in der Draufsicht auf eine ausgedehntere Dichtungslage 3, die sich im Wesentlichen über die gesamte Oberfläche der abzudichtenden Gegenflächen (also eines Motorblocks und eines Zylinderkopfes) erstreckt. Die ausgedehntere Dichtungslage 3 besteht beispielsweise aus Federstahl. In sie sind verschiedene Durchgangsöffnungen eingebracht, nämlich im Inneren der Dichtungslage drei nebeneinander angeordnete Durchgangsöffnungen 4, die den Brennraumöffnungen entsprechen. Um die Brennraumöffnungen 4 herum sind zum Rand 9 der Dichtung 1 hin verschiedene weitere Öffnungen 8 in der zweiten Dichtungslage 3 vorhanden. Diese entsprechen Schraubenöffnungen, während Ölöffnungen und Öffnungen für Kühlflüssigkeit hier der Übersichtlichkeit halber nicht eingezeichnet sind. Diese können jedoch dem Stand der Technik entsprechend ausgestaltet sein.

Die Durchgangsöffnungen 4 sind jeweils von einer diese umschließende Sicke 5 umgeben. Der Verlauf der Sicken 5 ist hier durch zwei Linien angegeben, welche die Lage der Sickenschenkel verdeutlichen. Die Querschnittsform der Sicken 5 ist grundsätzlich beliebig. In Figuren 2 bis 18 haben die Sicken 5 einen trapezförmigen Querschnitt. Es können jedoch auch Sicken mit gerundetem Querschnitt verwendet werden.

Auf der dem Brennraum 4 zugewandten Seite der Sicke 5 verläuft mit Abstand zur Sicke, aber bis an den Brennraumrand 40 heranreichend eine Strukturierung 7. Während die Sicken auch aus Platzgründen so durch den Stegbereich 30 geführt sind, dass jeweils nur der dem Brennraumrand 40 zugewandte Schenkel fortgeführt wird, während der andere Schenkel zum entsprechenden Sickenschenkel der Sicke des benachbarten Brennraums weitergeführt wird, ist der verbleibende Platz ausreichend, um die Strukturierung 7 mit unverminderter Breite durch den Stegbereich 30 hindurchzuführen, so dass jede Strukturierung 7 einen Brennraum 4 ringförmig umschließt.

Die Ausschnitte A und B verdeutlichen den Verlauf der Strukturierung 7 in einer bevorzugten Ausführungsform entlang des Randes 40 der Brennraumöffnung 4. Aus den Teilbildern wird auch die Struktur der Sicken 5 mit jeweils zwei Sickenschenkeln 51 und einem dazwischen liegenden Sickenscheitel 52 deutlich (zwei der vier Linien fallen in den Übersichtsdarstellungen zusammen). Die Strukturierung 7 ist über ihren gesamten Verlauf in Form von sich abwechselnden Erhebungen 31 und Vertiefungen 32 ausgeführt, die auf virtuellen, zu einander parallelen Linien verlaufen. Im gezeigten Ausführungsbeispiel nehmen diese Strukturen 7 einen annähernd kreisringförmigen Bereich ein, der konzentrisch zu einer Brennraumöffnung 4 verläuft. Daraus ergibt sich, dass die Erstreckungsrichtung der Erhebungen 31 und Vertiefungen 32 in Abschnitten annähernd parallel (in der Nähe des Ausschnitts A) und in anderen Abschnitten quer (siehe Ausschnitt B) zum Rand 40 der Brennraumöffnung 4 bzw. zu der Sicke 5 verlaufen. Zwischen diesen genannten Abschnitten erstreckt sich jeweils ein großer Übergangsbereich. Bei identischer Querschnittsgestaltung bewirkt die Strukturierung quer zur Sicke eine größere Versteifung des strukturierten Bereichs als die Strukturierung parallel zur Sicke. Somit lässt sich der Ausgleich der unterschiedlichen Bauteilsteifigkeiten mitunter ohne weitere Maßnahmen erreichen. Weiter lässt sich über die gezielte Ausgestaltung der Dichte der Erhebungen und Vertiefungen oder anderer Parameter ihrer Querschnittsstruktur ein gezielter Ausgleich der Bauteilsteifigkeiten erzielen.

Anders als in Figur 1-a verläuft in den folgenden Ausführungsbeispielen 1-b bis 1-e der Großteil der Strukturierung auf der dem Brennraum 4 abgewandten Seite der Sicke 5. Im Beispiel der Figur 1-b wurde dabei im Stegbereich 30 auf eine Strukturierung 7 verzichtet. Die Strukturierung 7 wurde jedoch in den Einlaufbereichen 34 zu den Stegbereichen 30 breiter ausgeführt.

Im Vergleich zum Ausführungsbeispiel der Figur 1-b wird in dem der Figur 1-c auch Teile des Stegbereichs 30 - neben dem vergrößerten Einlaufbereich 34 - strukturiert. Die Strukturierung befindet sich dabei zwischen den durchlaufenden Sickenschenkeln. Der schmalste Bereich des Steges ist aus Platzmangel jedoch frei von einer Strukturierung.

Auch im Ausführungsbeispiel nach Figur 1-d ist der Verlauf der Strukturierung nach Figur 1-b durch eine Strukturierung 7 im Stegbereich 30 ergänzt. Hier verläuft sie aber auf der den Brennräumen zugewandten Seite der durchgeführten Sicke und läuft durch den gesamten Stegbereich.

Weiter ist in Figur 1-e demonstriert, dass es nicht in jedem Anwendungsfall notwendig ist, dass die Strukturierung 7 die Brennräume 4 ring- oder brillenförmig einschließt. Hier sind auch die Einlaufbereiche 34 zu den Stegbereichen 30 frei von einer Strukturierung. Abschließend zeigt Figur 1-f, dass es auch Anwendungsfälle gibt, bei denen die Strukturierung auf sehr begrenzte Bereiche beschränkt ist, beispielsweise auf den eigentlichen Stegbereich. Auf eine umlaufende Strukturierung wurde hier aufgrund der Gegebenheiten im betreffenden Motor verzichtet. Analog wäre es im Beispiel der Figur 1-e möglich, wenn dies von den Motorgegebenheiten her erforderlich ist, auf die Strukturierung 7 im Bereich 39 zwischen den beispielhaft eingezeichneten gestrichelten Linien 38 zu verzichten, wenn nur im Bereich 37 der Längskanten ein Ausgleich für geringe Bauteilsteifigkeiten notwendig ist.

Die Beispiele der Figuren 1-a bis 1-f stellen die Strukturierung aus Darstellungsgründen jeweils in der obersten Dichtungslage dar. Wie im folgenden noch gezeigt wird, kann sich diese jedoch auch in einer - in den Draufsichten nach Figuren 1-a bis 1-f nicht sichtbaren - unteren Dichtungslage befinden.

Wie in der Querschnitten der Figuren 2 bis 17 erkennbar, weisen alle dort gezeigten Dichtungen jeweils zwei weitere Dichtungslagen auf. Sie sind in der Draufsicht der Figuren 1-a bis 1-e nicht zu erkennen, da sie unterhalb der Dichtungslage 3 angeordnet sind. Die unmittelbar unter der Dichtungslage 3 angeordnete Dichtungslage 2 ist eine verkürzte Dichtungslage, die eine wesentlich geringere Ausdehnung als die ausgedehntere Dichtungslage 3 hat. Die verkürzte Dichtungslage 2 ist brillenartig ausgebildet und erstreckt sich ausschließlich in unmittelbarer Nachbarschaft um die Durchgangsöffnungen 4. Ihre Breite ist hier bis zu siebenmal so groß wie der Abstand zwischen den Sickenfüßen 50 und 51 der Sicke 5.

Die verkürzte Dichtungslage 2 entspricht einem Shim und spart den Randbereich 6 der zweiten Dichtungslage 3 vollkommen aus. Entsprechend sind in der Dichtungslage 2 auch ausschließlich Durchgangsöffnungen 4, ansonsten aber keine weiteren Durchgangsöffnungen vorhanden. Im Randbereich 6 besteht die erfindungsgemäße Flachdichtung 1 ausschließlich aus der zweiten Dichtungslage 3 und einer unterhalb der Dichtungslage 2 angeordneten weiteren ausgedehnteren Dichtungslage 3'. Aufgrund dieser Konstruktion wird im Bereich um die Durchgangsöffnungen 4 eine größere Materialstärke erreicht als im Randbereich 6, wo die verkürzte Dichtungslage 2 nicht vorhanden ist. Aufgrund dessen erhöht sich die Pressung im Bereich um die Durchgangsöffnungen 4, sodass hier eine verbesserte Abdichtung der Brennraumöffnungen durch die Sicken 5 erreicht wird.

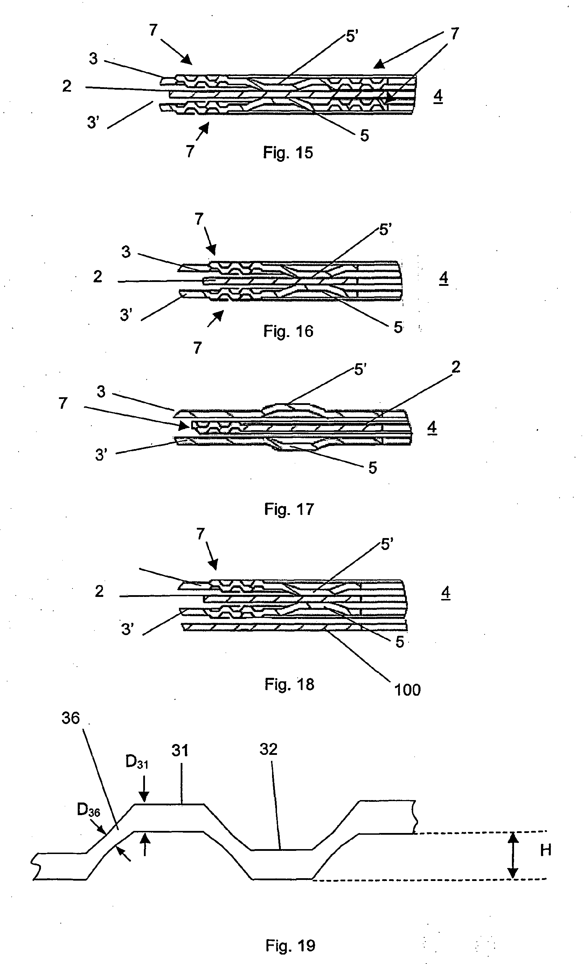

Die weitere Dichtungslage 3' besitzt ebenfalls eine Flächenausdehnung, die im Wesentlichen der Ausdehnung der abzudichtenden Gegenflächen entspricht. Sie ist beispielsweise in Richtung auf den Motorblock hin orientiert. Auch die Dichtungslage 3' weist Sicken 5' auf, die jeweils eine der Brennraumöffnungen 4 umgeben. Form und Verlauf der Sicken 5' entsprechen vollkommen denjenigen der Sicken 5 der Dichtungslage 3. Die Sicken 5 und 5' sind spiegelsymmetrisch zueinander ausgebildet und weisen mit Ausnahme des Beispiels aus Figur 17 mit ihren Sickenscheiteln aufeinander zu. Auch das Material, aus dem die Dichtungslage 3' gefertigt ist, entspricht demjenigen der Dichtungslage 3. Im Ergebnis haben deswegen die Sicken 5 und 5' die gleiche Federcharakteristik.

Wie in Fig. 2 durch die gestrichelten Linien angedeutet, können die erfindungsgemäßen Dichtungen auch mehr als drei Dichtungslagen enthalten. Im gezeigten Beispiel sind zwei zusätzliche Decklagen 3" und 3'" vorhanden, von denen die erstere der Dichtungslage 3' entspricht und die letztere der Dichtungslage 3. Die Sicken 5" und 5'" verlaufen zu den Sicken 5 bzw. 5' der jeweils benachbarten Dichtungslage erneut spiegelbildlich. Im Beispiel der Figur 18 enthält die Dichtung eine Glattblechlage 100, die weder die Strukturierung noch Sicken enthält. Eine derartige Lage ist oftmals dicker ausgebildet als die übrigen Lagen und kann der Anpassung der Gesamt-Dichtungshöhe an den abzudichtenden Dichtspalt dienen.

Die in Figuren 2 bis 17 gezeigten Ausführungsbeispiele unterscheiden sich voneinander durch die Anordnung der Strukturierung 7. In allen Fällen jedoch dient die Strukturierung 7 der lokalen Anpassung der Dichtung an für die Abdichtung besonders kritische Bereiche der Gegenflächen und in den dargestellten Beispielen speziell der Oberfläche des Motorblocks oder des Zylinderkopfs. Die Strukturierung 7 ist jeweils so angeordnet, dass sie eine lokale Erhöhung der Pressung im kritischen Bereich erlaubt, verglichen mit einer Situation, in der die Strukturierung nicht vorhanden ist. Diese Pressungserhöhung wird dadurch erreicht, dass in die entsprechende Dichtungslage Erhebungen 31 und Vertiefungen 32 eingeformt sind, aufgrund derer die Dicke der Dichtungslage im strukturierten Bereich sich gegenüber der originären Dicke der Dichtungslage (also der Dicke vor der Strukturierung) erhöht. Je nach Ausführung steht die Oberflächenerhöhung über nur eine oder über beide Oberflächen der Dichtungslage vor.

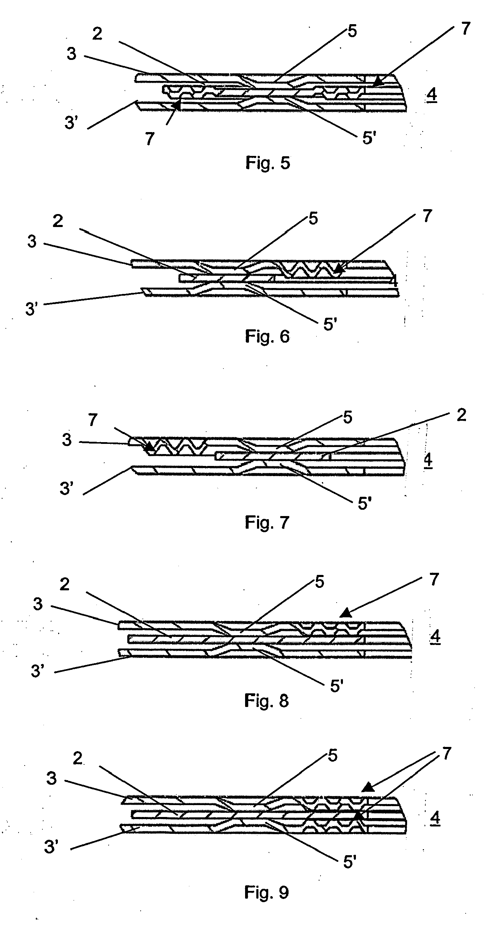

In den in Figuren 2 bis 5 ebenso wie in Figur 17 gezeigten Varianten ist die Strukturierung jeweils in der verkürzten Dichtungslage 2 ausgebildet und steht über beide derer Oberflächen vor. Figuren 2 und 3 zeigen die Anordnung in einem Bereich zwischen Sicke 5 und Brennraumöffnung 4, Figuren 4 und 17 zeigen die Anordnung auf der von der Brennraumöffnung 4 abgewandten Seite der Sicke 5 und Figur 5 beidseitig der Sicke 5. Die Strukturierung 7 befindet sich in den Randbereichen der Dichtungslage 2. Der Mittelbereich ist plan, um einen ebenen Aufstandsbereich für die Sicken 5, 5' zu liefern.

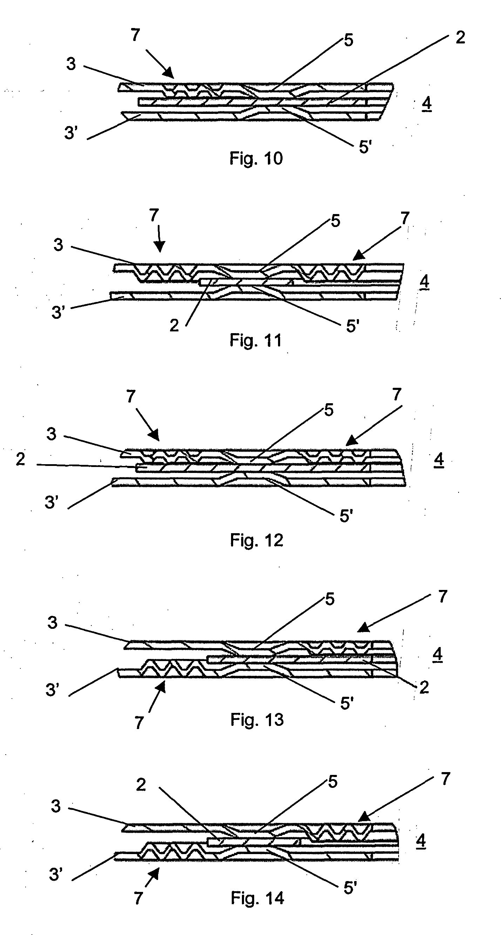

In den Dichtungen gemäß Figuren 6 bis 16 ist die Strukturierung 7 in der ausgedehnteren Dichtungslage 3 vorhanden, in Figuren 9 und 13 bis 16 zusätzlich in der weiteren Dichtungslage 3'. Die Strukturierung 7 ist jeweils streifenförmig ausgebildet und folgt in ihrem Verlauf dem Verlauf der benachbarten Sicke. In den Dichtungen gemäß Figuren 6, 8 und 9 liegt sie zwischen Sicke 5 und Brennraumöffnung 4, in Figuren 7, 10 und 16 auf der von der Brennraumöffnung 4 abgelegenen Seite der Sicke und in Figuren 11 bis 15 beidseitig der Sicke 5. Während in Figuren 11 und 12 die beidseitige Struktur in derselben Dichtungslage (3) eingebracht ist, ist sie in Figuren 13 und 14 auf jeder Seite auf einer anderen Dichtungslage (3 und 3') vorhanden. In Figur 15 schließlich weisen beide Lagen (3 und 3') beidseitig Strukturierungen 7 auf.

In den Beispielen der Figuren 6, 7, 11 und 14 ebenso wie auf der dem Brennraum abgewandten Seite in Figur 13 ist die Strukturierung 7 seitlich der verkürzten Dichtungslage 2 angeordnet. Es findet also auch im verpressten Zustand keine Überlappung zwischen der in allen Beispielen der Figuren 6 bis 12 vollkommen planen Dichtungslage 2 und der Strukturierung 7 statt. Die Höhe, die durch die Strukturierung 7 zusätzlich in den strukturierten Bereich eingebracht wird, ist hier überall größer als die Dicke der verkürzten Dichtungslage 2. Hierdurch wird gewährleistet, dass die Dichtung immer im strukturierten Bereich ihre größte Dicke aufweist. Die gegenüber dem Bereich der Sicken 5 und 5' eingebrachte Höhe entspricht also der Höhe, die durch die Strukturierung in den strukturierten Bereich eingebracht ist abzüglich der Dicke der verkürzten Dichtungslage 2. Es ist somit möglich, nur geringe Überhöhungen durch die Strukturierung gezielt einzubringen. Durch die Strukturierung wird die Sicke also lokal in den Kraftnebenschluss gebracht, während sie in den übrigen Bereichen im Krafthauptschluss liegt.

In Figuren 8 bis 10, 12, 14 bis 18 sowie auf der dem Brennraum zugewandten Seite der Figur 13 besitzt die verkürzte Dichtungslage 2 eine größere Ausdehnung als in den vorstehend beschriebenen, sodass sich Strukturierung 7 und verkürzte Dichtungslage 2 überlappen. Die Strukturierung ist im Vergleich zu den zuvor gezeigten Beispielen weniger tief ausgeprägt. Die durch die Strukturierung 7 zusätzlich eingebrachte Dicke ist dabei geringer als die Dicke der verkürzten Dichtungslage 2.

Wird die Strukturierung in der verkürzten Dichtungslage 2 vorgesehen, so wird diese Lage meist auch nur so stark strukturiert, dass ihre Dicke einschließlich Strukturierung geringer ist als das Doppelte der Ausgangsblechstärke. Dies wird an den Beispielen der Figuren 2-5 deutlich.

In den dargestellten Beispielen besteht die Strukturierung 7 aus Erhebungen 31 und Vertiefungen 32, die jeweils abwechselnd auf geraden Linien angeordnet sind. Diese geraden Linien sind virtuelle Linien, die über den gesamten strukturierten Bereich in paralleler Anordnung verlaufen. Diese virtuellen Linien schneiden dabei auch die Durchgangsöffnungen 4 und die sie umgebenden Sicken 5. Die Erhebungen und Vertiefungen sind dabei jedoch nur in den schraffiert eingezeichneten Bereichen vorhanden. In der in den Ausschnitten A und B zur Figur 1-a gezeigten bevorzugten Ausführungsform sind alle Erhebungen auf benachbarten parallelen Linien angeordnet. Es ist jedoch auch möglich, die Erhebungen und Vertiefungen auf zueinander benachbarten parallelen Linien jeweils versetzt anzuordnen, sodass sich auch in einer zu den parallelen Linien senkrechten Richtung die Erhebungen und Vertiefungen abwechseln. Insgesamt ergibt sich dabei eine schachbrettähnliche Anordnung der Erhebungen und Vertiefungen im strukturierten Bereich 7.

Die Höhe, mit welchen die Erhebungen über die Oberfläche der Dichtungslage in Richtung auf die benachbarte Sicke hin vorstehen, kann entsprechend der erwünschten Pressung eingestellt werden. Dabei ist es grundsätzlich möglich, die Höhe der Erhebungen im strukturierten Bereich zu variieren. Auf diese Weise kann den Bauteilsteifigkeiten Rechnung getragen werden und eine Vergleichmäßigung der Pressung um die Durchgangsöffnungen 4 herum erreicht werden. Selbstverständlich ist es ebenfalls möglich, falls dies gewünscht ist, eine unregelmäßige Pressungsverteilung im Bereich um eine Durchgangsöffnung 4 herum oder von einer Durchgangsöffnung auf eine andere Durchgangsöffnung 4 einzustellen.

Wie bereits erwähnt, werden die Erhebungen 31 und Vertiefungen 32 der Strukturierung 7 bevorzugt durch Prägen hergestellt. Der Prägeschritt geschieht bevorzugt unter Verwendung eines Prägewerkzeugs mit zwei komplementären Prägeformen. Diese Prägeformen weisen zweckmäßig jeweils Prägevorsprünge auf, die in entsprechende Vertiefungen der komplementären Prägeform eingreifen. Erhebungen und Vertiefungen der einen Prägeform sind also versetzt gegenüber den Erhebungen und Vertiefungen der komplementären Prägeform angeordnet. Sind die Erhebungen und Vertiefungen der komplementären Prägeformen jeweils gleichartig ausgebildet, ergibt sich aus dieser Werkzeugkonstellation eine besondere Materialstärkenverteilung in dem mit der Prägeform strukturierten Bereich der bearbeiteten Dichtungslage. Dies soll schematisch anhand der Figur 19 verdeutlicht werden.

Figur 19 zeigt einen Ausschnitt aus einem Bereich, einer Dichtungslage, in den eine Strukturierung 7 vorhanden ist. In diesen Bereich sind Erhebungen 31 und Vertiefungen 32 eingeprägt. Die Erhebungen 31 stehen mit einer Höhe H über die Oberfläche der Dichtungslage 3 vor. Durch das Prägen wurde die Dicke der Dichtungslage 3 im Bereich der Flanken 36 gegenüber der Dicke der Erhebungen 31 bzw. Vertiefungen 32 verringert. Die Dicke D₃₆ im Flankenbereich ist also geringer als die Dicke D₃₁ der Dichtungslage 3 im Bereich der Erhebungen bzw. Vertiefungen. Diese Umformung des Materials und Verringerung der Materialdicke führt zur Erhöhung der Steifigkeit des strukturierten Bereiches. Das Ausmaß der Flankenverjüngung ist in Figur 10 übersteigert dargestellt. Es beträgt häufig zwischen 10 und 25 %, insbesondere zwischen 13 und 19%.

## Patentansprüche

1. Metallische Flachdichtung (1) mit zwei oder mehr metallischen Dichtungslagen (2, 3, 3', 3"), von denen eine verkürzte Dichtungslage (2) gegenüber der wenigstens einen anderen Dichtungslage (3, 3', 3") eine geringere Flächenausdehnung aufweist, und mit wenigstens einer durch die Dichtungslagen (2, 3, 3', 3") hindurchgehenden Durchgangsöffnung (4), die von einer in eine der ausgedehnteren Dichtungslagen (3) eingeformten, in sich geschlossenen Sicke (5) umgeben wird, wobei die verkürzte Dichtungslage (2) einen die Sicke (5) nicht umfassenden Außenrandbereich (6) der ausgedehnteren Dichtungslage (3) freilässt,
**dadurch gekennzeichnet,**
**dass** in einer der Dichtungslagen (2, 3, 3', 3") in einem Bereich der Dichtung, in dem die verkürzte Dichtungslage (2) vorhanden ist, oder unmittelbar seitlich an diesen Bereich angrenzend benachbart zur Position der Sicke (5) wenigstens eine Strukturierung ausgebildet ist, die über mindestens eine Oberfläche der Dichtungslage (2, 3, 3', 3") vorsteht und die aus einer Vielzahl in die Dichtungslage (2, 3, 3', 3") eingeformter, einander abwechselnder Erhebungen (31) und Vertiefungen (32) besteht, und dass die Strukturierung (7) zumindest abschnittsweise in Umfangsrichtung um die Durchgangsöffnung (4) vorhanden ist.

2. Metallische Flachdichtung nach Anspruch 1,
**dadurch gekennzeichnet,**
**dass** sie ihre größte Gesamtdicke im Bereich der Strukturierung (7) aufweist.

3. Metallische Flachdichtung nach einem der vorhergehenden Ansprüche,
**dadurch gekennzeichnet,**
**dass** die Strukturierung (7) nur abschnittsweise in Umfangsrichtung um die Durchgangsöffnung (4) vorhanden ist..

4. Metallische Flachdichtung nach einem der vorhergehenden Ansprüche,
**dadurch gekennzeichnet,**
**dass** die Strukturierung (7) zwischen Sicke (5) und Durchgangsöffnung (4) oder auf der von der Durchgangsöffnung abgewandten Seite der Sicke (5) oder auf beiden Seiten der Sicke (5) vorhanden ist.

5. Metallische Flachdichtung nach einem der vorhergehenden Ansprüche,
**dadurch gekennzeichnet,**
**dass** die Strukturierung (7) streifenförmig und insbesondere ringsegmentförmig ausgebildet ist.

6. Metallische Flachdichtung nach einem der vorhergehenden Ansprüche,
**dadurch gekennzeichnet,**
**dass** die Erhebungen (31) und Vertiefungen (32)
- linienförmig, bevorzugt in Form konzentrischer Ringe oder Ringsegmente, ausgebildet sind und eine wellenartige Struktur ergeben oder
- auf wenigstens einer Schar im Wesentlichen parallel über die Gesamtausdehnung der Strukturierung (7) verlaufender virtueller gerader Linien angeordnet sind, oder
- entlang mindestens zweier sich schneidender Scharen virtueller gerader Linien und insbesondere entlang sich rechtwinklig schneidender virtueller gerader Linien verlaufen.

7. Metallische Flachdichtung nach Anspruch 6,
**dadurch gekennzeichnet,**
**dass** die Vertiefungen (32) in die Dichtungslage (2, 3, 3', 3") eingeprägt sind, wobei bevorzugt die Dicke (D₃₆) der Dichtungslage (2, 3, 3', 3") im Flankenbereich (36) gegenüber der Dicke (D₃₁) dieser Dichtungslage (2, 3, 3', 3") im Bereich der Erhebungen (31) oder Vertiefungen (32) verringert ist.

8. Metallische Flachdichtung nach einem der vorhergehenden Ansprüche,
**dadurch gekennzeichnet,**
**dass** die Strukturierung (7) in der verkürzten Dichtungslage (2) ausgebildet ist.

9. Metallische Flachdichtung nach einem der vorhergehenden Ansprüche,
**dadurch gekennzeichnet,**
**dass** die Strukturierung (7) in wenigstens einer der ausgedehnteren Dichtungslagen (3, 3', 3") ausgebildet ist.

10. Metallische Flachdichtung nach Anspruch 9,
**dadurch gekennzeichnet,**
**dass** die Strukturierung (7) mit der verkürzten Dichtungslage (2) überlappt.

11. Metallische Flachdichtung nach Anspruch 10
**dadurch gekennzeichnet,**
**dass** die Höhe (H) der Strukturierung zwischen 0,01 und 0,05 mm beträgt.

12. Metallische Flachdichtung nach Anspruch 9,
**dadurch gekennzeichnet,**
**dass** die Strukturierung (7) mit der verkürzten Dichtungslage (2) nicht überlappt.

13. Metallische Flachdichtung nach Anspruch 12,
**dadurch gekennzeichnet,**
**dass** die Höhe (H) der Strukturierung (7) 0,09 bis 0,40 mm beträgt.

14. Metallische Flachdichtung nach einem der vorhergehenden Ansprüche,
**dadurch gekennzeichnet,**
**dass** in der wenigstens einen ausgedehnteren Dichtungslage (3, 3', 3") Befestigungsmittelöffnungen (8) vorhanden sind und die Strukturierung (7) in Bereichen in der Nähe der Befestigungsmittelöffnungen (8) eine geringere Höhe (H) hat als in entfernter von den Befestigungsmittelöffnungen (8).

15. Metallische Flachdichtung nach einem der Ansprüche 1 bis 13,
**dadurch gekennzeichnet,**
**dass** sie mehrere, jeweils von einer Sicke (5) umgebene Durchgangsöffnungen (4) aufweist und die Strukturierung (7) im Bereich zwischen benachbarten Durchgangsöffnungen (4) befindet.

16. Metallische Flachdichtung nach einem der vorhergehenden Ansprüche,
**dadurch gekennzeichnet,**
**dass** die verkürzte Dichtungslage (2) brillenartig ausgebildet ist.

17. Metallische Flachdichtung nach einem der vorhergehenden Ansprüche,
**dadurch gekennzeichnet,**
**dass** sie zwei oder mehr ausgedehntere Dichtungslagen (3, 3', 3") aufweist.

18. Metallische Flachdichtung nach Anspruch 17,
**dadurch gekennzeichnet,**
**dass** entweder
- die Strukturierung (7) in einer ersten der ausgedehnteren Dichtungslagen (3), insbesondere einer abgesehen von der Strukturierung (7) planen Dichtungslage, ausgebildet ist und die Sicke (5) in einer zweiten der ausgedehnteren Dichtungslagen (3'), oder
- Strukturierung (7) und Sicke (5) in derselben ausgedehnteren Dichtungslage (3) vorhanden sind.

19. Metallische Flachdichtung nach Anspruch 17 oder 18,
**dadurch gekennzeichnet,**
**dass** die ausgedehnteren Dichtungslagen (3, 3', 3") zueinander komplementäre und insbesondere spiegelbildlich zueinander angeordnete Sicken (5) aufweisen.

20. Metallische Flachdichtung nach einem der vorhergehenden Ansprüche,
**dadurch gekennzeichnet,**
**dass** die Sicke (5) wenigstens eine der folgenden Eigenschaften in Umfangsrichtung ändert:
- ihre Querschnittsform,
- ihre Höhe,
- ihre Breite,
wobei die Änderung bevorzugt so erfolgt, dass die Steifigkeit der Sicke (5) mit zunehmendem Abstand von die Sicke (5) umgebenden Befestigungsmittelöffnungen (8) zunimmt.

21. Metallische Flachdichtung nach einem der vorhergehenden Ansprüche,
nämlich Dichtung im Bereich von Verbrennungsmotor oder Abgasstrang, insbesondere Abgaskrümmerdichtung oder Zylinderkopfdichtung, in der die Durchgangsöffnungen (4) Brenngasöffnungen oder Brennraumöffnungen entsprechen.

22. Anordnung einer metallischen Flachdichtung nach Anspruch 21, nämlich einer Zylinderkopfdichtung auf der Oberfläche eines Motorblocks,
**dadurch gekennzeichnet,**
**dass** die Strukturierung (7) oberhalb eines Bereiches des Motorblocks angeordnet ist, in dem dieser eine geringere Bauteilsteifigkeit als in anderen Bereichen aufweist, insbesondere oberhalb eines Stegbereiches zwischen benachbarten Zylinderbohrungen.

23. Anordnung einer metallischen Flachdichtung nach Anspruch 21, nämlich einer Zylinderkopfdichtung auf der Unterseite eines Zylinderkopfs,
**dadurch gekennzeichnet,**
**dass** die Strukturierung (7) unterhalb eines Bereiches des Zylinderkopfs angeordnet ist, in dem dieser eine geringere Bauteilsteifigkeit als in anderen Bereichen aufweist, insbesondere in einem Bereich konzentrisch zu den Brennraumöffnungen.
